# EUROPÄISCHE PATENTSCHRIFT

(11) **EP 3 724 688 B1**
(45) Veröffentlichungstag und Bekanntmachung des Hinweises auf die Patenterteilung: **30.09.2026**
(21) Anmeldenummer: 18803366.6
(22) Anmeldetag: 08.11.2018
(51) Int. Cl.: G01S 19/23, G01S 19/36

(54) **VERFAHREN UND VORRICHTUNG ZUR ERMITTLUNG VON KORREKTURINFORMATIONEN FÜR EINE ANTENNE EINES FAHRZEUGS**
METHOD AND DEVICE FOR DETERMINING CORRECTION INFORMATION FOR AN ANTENNA OF A VEHICLE
PROCÉDÉ ET DISPOSITIF DE DÉTERMINATION D'INFORMATIONS DE CORRECTION POUR UNE ANTENNE DE VÉHICULE

(30) Priorität: 15.12.2017 DE 102017222912
(43) Veröffentlichungstag der Anmeldung: 21.10.2020
(73) Patentinhaber: AUMOVIO Germany GmbH, 60488 Frankfurt am Main (DE)
(72) Erfinder: ZALEWSKI, Michael, 60438 Frankfurt am Main (DE); STÄHLIN, Ulrich, Oakland Township, Michigan 48306 (US)
(74) Vertreter: Aumovio Corporation
(86) Internationale Anmeldenummer: PCT/EP2018/080535
(87) Internationale Veröffentlichungsnummer: WO 2019/115098

(56) Entgegenhaltungen:
- EP-A1- 3 367 133
- CN-A- 106 443 744
- ANDREW J O'BRIEN ET AL: "Precise Calibration of Adaptive Antennas for GNSS Receivers on Platforms", GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA, 23 September 2011 (2011-09-23), pages 1102, XP056000855

## Beschreibung

### TECHNISCHES GEBIET

Die vorliegende Erfindung betrifft ein Verfahren und eine Vorrichtung zur Ermittlung von Korrekturinformationen für eine Antenne.

### TECHNISCHER HINTERGRUND

Neue Funktionen benötigen zunehmend präzisere Informationen über die Position und über die Orientierung eines Fahrzeuges.

Die CN 106 443 744 A betrifft ein Kalibrierverfahren für eine GNSS-Doppelantenne, wobei in einem ersten Schritt Beobachtungsdaten, enthaltend die Lagedaten der GNSS-Doppelantenne und einer Inertialnavigation, erfasst werden, und in einem zweiten Schritt eine Kalibrierung der Lageneigung der GNSS-Doppelantenne erfolgt. Der zweite Schritt umfasst hierbei die Generierung einer ersten DCM-Matrix unter Verwendung von Gier-, Nick- und Rollwinkel der Inertialnavigation und weiterhin Verwendung des Gier- und Neigungswinkels der GNSS-Doppelantenne zur Generierung einer zweiten DCM-Matrix. Anschließend wird durch Multiplikation DCM-Matrizen eine Winkelrelationsmatrix ermittelt, wobei unter Heranziehung der Elemente der solchermaßen ermittelten Winkelrelationsmatrix die Differenz zwischen dem Gierwinkel und dem Neigungswinkel der Doppelantenne und dem Gierwinkel und dem Neigungswinkel der Inertialnavigation bestimmt und ein Mittelwert aus einer Sequenz ermittelter Differenzwerte dieser Winkel berechnet wird, welche als Kalibrierwerte herangezogen werden können.

Die nachveröffentlichte EP3367133 A1 bezieht sich auf das Kalibrieren einer GNSS-Antenne eines Fahrzeuges. Hierzu wird ein Kalibrierungsprozess durchgeführt, bei dem sich die horizontale oder vertikale Orientierung des Fahrzeugs ändert und es werden Elevations- und Azimut-abhängige Fehlerkorrekturen ermittelt. Nach dem Kalibrierungsprozess werden die ermittelten Fehlerkorrekturen in einem Fehlerkorrekturspeicher hinterlegt. Eine Antenne empfängt von einem Satelliten ausgesendete GNSS-Signale, auf den empfangenen Signalen wird eine Entfernungsmessung zu dem Satelliten durchgeführt. Das Fahrzeug befindet sich zur Kalibrierung auf einer bewegbaren Plattform, die um eine Achse drehbar ist. Somit kann sich die horizontale oder vertikale Orientierung des Fahrzeugs ändern. Soll die Antenne zusammen mit dem Fahrzeug kalibriert werden, so wird das Fahrzeug auf der Achse gedreht. Für unterschiedliche Orientierungen können unterschiedliche Fehlerkorrekturen ermittelt werden. Alternativ kann das Fahrzeug relativ zu einer lokalen Referenzstation bewegt werden, wobei dies entsprechende Figuren fährt.

Für die Lokalisierung mittels eines globalen Satellitennavigationssystems können mittels Codemessungen Pseudostrecken zwischen den jeweiligen Satelliten und einem GNSS-Empfänger und mittels Trägerphasenmessung Streckenunterschiede zwischen den verschiedenen Satelliten und dem GNSS-Empfänger bestimmt und die Position des Empfängers berechnet werden. Für die Bestimmung der Pseudostrecken wird die Distanz zwischen dem Phasenzentrum der GNSS-Antenne und dem Phasenzentrum der Satellitenantenne per Laufzeitmessung ermittelt. Das Phasenzentrum einer Antenne ist ein virtueller Punkt auf den sich die Messung bezieht und der üblicherweise sowohl eine Richtungsabhängigkeit aufweist und zudem auch um einige Meter im Raum um die Antenne angeordnet sein kann, sogenannte Phasenzentrumsvariation. Aufgrund der verschiedenen Positionen der Satelliten kann sich daher auch für jeden Satelliten ein - zum Teil erheblich - abweichendes Phasenzentrum der GNSS-Antenne ergeben. Um die GNSS Positionsbestimmung nicht negativ zu beeinflussen, übermitteln die GNSS Satelliten Korrekturtherme für das virtuelle Phasenzentrum der jeweiligen Satellitenantenne, um diese Effekte korrigieren zu können.

Die übliche Messgenauigkeit bei Codemessung liegt aktuell im Bereich einiger Meter, weshalb eine GNSS-Antenne herangezogen werden kann, deren Phasenzentrum eine Streuung im Bereich von Zentimetern bis Dezimetern aufweist und damit für die Auswertung nicht von wesentlicher Bedeutung sind. Für zukünftige Funktionen ist die Genauigkeit dieser Art GNSS-Empfänger unzureichend.

Für präzisere Anwendungen werden entsprechend präzise vermessene Antennen ohne wesentliche Richtungsabhängigkeit sowie eine leistungsfähigere Verarbeitungselektronik eingesetzt, wobei beispielsweise mittels der Trägerphasenmessung eine Genauigkeit im Millimeterbereich erzielt werden kann. Zur Kalibrierung wird unter Laborbedingungen das Phasenzentrum über einen möglichst großen Raumwinkel um die Antenne vermessen, wobei ein Sender die Antenne aus unterschiedlichen Richtungen mit einem Testsignal beaufschlagt. Hierbei ist die Position und Orientierung von Antenne und Sender bekannt. Dadurch kann in Abhängigkeit der Einstrahlrichtung die Position des Phasenzentrums beispielsweise relativ zum Antennenreferenzpunkt (ARP), sogenannter Phasenzentrumsoffset, bestimmt werden, welche zur Korrektur der Richtungsabhängigkeit des Phasenzentrums bei der Positionsbestimmung herangezogen werden. Nachteilig ist, dass entsprechend hochwertige GNSS-Empfänger bzw. Antennen sehr kostenintensiv sind und daher insbesondere in der einem hohen Kostendruck unterworfenen Fahrzeugzulieferindustrie für die Serienfertigung keine Berücksichtigung finden.

### BESCHREIBUNG DER ERFINDUNG

Es ist daher eine Aufgabe der vorliegenden Erfindung, eine Lösung bereitzustellen, welche eine verbesserte Genauigkeit mit einer möglichst kostengünstigen Antenne ermöglicht.

Diese Aufgabe wird durch die Gegenstände der unabhängigen Ansprüche gelöst. Bevorzugte Ausführungsformen der Erfindung sind Gegenstand der abhängigen Ansprüche und der Beschreibung.

Die Erfindung beschreibt ein Verfahren zur Ermittlung von Korrekturinformationen für eine Antenne zum Empfangen von Daten eines Satelliten eines Satellitennavigationssystems, aufweisend die Schritte:
- Bestimmen einer ersten Abstandsinformation der Antenne zu einem Satelliten eines Satellitennavigationssystems,
- Erfassen einer Positionsinformation und einer Orientierungsinformation der Antenne auf Basis von Sensorinformationen,
- Bestimmen einer zweiten Abstandsinformation der Antenne zu dem Satelliten auf Basis der mittels Sensorinformationen erfassten Positionsinformation,
- Ermitteln einer Abweichung der ersten Abstandsinformation zu der zweiten Abstandsinformation,
- Bestimmen einer Korrekturinformation auf Basis der ermittelten Abweichung und
- Abspeichern der Korrekturinformation mit Bezug auf die mittels der Sensorinformationen erfasste Orientierungsinformation in einem Datenspeicher.

Die Ermittlung von Korrekturinformationen wird dabei mindestens bei einer ersten Frequenz und einer davon verschiedenen zweiten Frequenz durchgeführt.

Der Erfindung liegt der Gedanke zugrunde, dass unter Heranziehung von auf unterschiedliche Arte und Weise gewonnenen Abstandsinformationen der Antenne zu einem Satelliten unter Berücksichtigung der Orientierung eine Schätzung von Korrekturinformationen des winkelabhängigen Phasenzentrumsoffsets der Antenne realisiert werden kann. Die Berücksichtigung mehrerer Frequenzen ermöglicht bessere Korrekturinformationen für die jeweilige Frequenz. Eine Positionsinformation der Antenne definiert zweckmäßigerweise einen Bezugspunkt, bspw. den Antennenreferenzpunkt, dessen Position innerhalb eines globalen Koordinatensystems bestimmbar ist. Orientierungsinformationen in diesem Sinne sind vorzugsweise eine Orientierung der Antenne insbesondere mit Bezug auf ein globales Koordinatensystem beschreibende Informationen. Bei Satellitennavigationssystemen werden üblicherweise die jeweiligen Satellitenpositionen mit den Ephemeriden übertragen, sodass diese Positionen grundsätzlich als bekannt vorausgesetzt werden können. Die erste Abstandsinformation lässt sich beispielsweise anhand der Signallaufzeit der von dem Satelliten an die Antenne übertragenen Daten ermitteln oder als Empfangsintensität des Signals. Demnach ist die Vergleichbarkeit der Abstandsinformmationen von bevorzugtem Interesse, ein absoluter Abstandstandswert zu dem Satelliten braucht demnach nicht notwendigerweise zu Grunde gelegt werden. Beispielsweise lässt sich auch eine Empfangsintensität mit einer erwarteten Empfangsintensität vergleichen. Beiden ist eine Abstandsinformation inhärent. Diese Vorgehensweise ist bereits für globale Satellitennavigationssysteme bekannt.

Liegt ein richtungsabhängiges Phasenzentrumsoffset vor, ergibt sich bei gegebener Ausrichtung der Antenne für jedes empfangene Satellitensignal ein unterschiedlicher Phasenzentrumsoffsetwert, welcher bei dessen Kenntnis entsprechend kompensierbar ist. Diese Berechnung wird vorzugsweise für jeden empfangenen Satelliten durchgeführt. Das erfindungsgemäße Verfahren wird entsprechend zweckmäßigerweise für eine Mehrzahl von Satelliten eines oder mehrerer Satellitennavigationssysteme durchgeführt. Auf Grundlage der mit den Ephemeriden übertragenen Satellitenposition besteht bei erworbener Kenntnis der Orientierung und ermittelter richtungsabhängiger Korrekturparameter die Möglichkeit die Empfangsrichtung jedes Satelliten in Bezug auf die Richtungsabhängigkeit des Phasenzentrumsoffsets zu berücksichtigen.

Ausgehend von einer bekannten absoluten Orientierung in einem globalen Koordinatensystem erfolgt unter Berücksichtigung der erfassten Orientierungsinformationen eine Ermittlung der Korrekturinformationen des winkelabhängigen Phasenzentrumsoffsets der Antenne. Dadurch kann der technische Vorteil einer erhöhten Genauigkeit bei der Lokalisierung und Bestimmung der Orientierung bei Vorliegen einer vergleichsweise kostengünstigen Antenne bzw. GNSS-Empfänger erzielt werden. Da einfache Rechenvorschriften zugrunde gelegt werden können, werden auch geringe Rechenressourcen benötigt. Grundsätzlich ist ein einmaliger Vermessungsvorgang für die Bestimmung der Korrekturinformationen ausreichend.

Das Phasenzentrumsoffset ist üblicherweise Code und Frequenzabhängig. Mit hochpreisigen GNSS-Antennen für Präzisionsanwendungen muss mit einem einzigen Design ein Optimum für mehrere Frequenzbereiche gefunden werden, was üblicherweise einer gegenläufigen Abhängigkeit unterliegt. Häufig erfolgt die Optimierung auf eine Frequenz, typischerweise L1. Damit ist für L2 ein größeres Phasenzentrumsoffset gegeben als für eine auf L2 optimierte Antenne. Alternativ werden Antennen in der Weise ausgelegt, dass ein möglichst guter Kompromiss der Phasenzentrumsoffsets von L1 und L2 erzielt wird, wodurch die Genauigkeit für beide Frequenzen verschlechtert wird.

Diesbezüglich ist ein weiterer Vorteil der Erfindung, dass eine Anwendung nicht nur für GPS L1 C/A realisiert werden kann, sondern auch zur Ermittlung von Korrekturinformationen für andere Frequenzen L2, L5 und Codes (P(Y)...) unmittelbar umsetzbar ist, wobei lediglich neue bzw. weitere Korrekturinformation bezogen auf die jeweilige Frequenz erfasst und zur Korrektur herangezogen werden. Eine Anpassung des Antennendesigns ist hierfür nicht erforderlich. Damit kann ein weiterer Nachteil des Stands der Technik überwunden werden.

Weiterbildungsgemäß wird das Verfahren zumindest teilweise während einer Kalibrierfahrt mit einem die Antenne aufweisenden Fahrzeug, insbesondere von einer von dem Fahrzeug umfassten elektronischen Kontrolleinheit, ausgeführt. Eine hohe Genauigkeit der Vermessung ist insbesondere dann erzielbar, wenn die Fahrdynamikwerte während der Kalibrierfahrt in einem stationären Bereich bleiben, beispielsweise der Schlupf der Räder während der Kalibrierfahrt also möglichst gering ist. Dadurch, dass die Antenne bereits am Fahrzeug montiert ist, finden auch Auswirkungen der Fahrzeugkomponenten auf die Richtungsabhängigkeit des Phasenzentrums bei der Bestimmung der Kalibrierparameter Berücksichtigung.

Entsprechend einer weiterbildenden Ausführungsform der Erfindung erfolgt an einem Startpunkt der Kalibrierfahrt ein Erfassen einer initialen Positionsinformation in einem globalen Koordinatensystem und einer initialen Orientierungsinformation, wobei während der Kalibrierfahrt die Positionsinformation und die Orientierungsinformation auf Basis von Sensorinformationen mit Bezug auf eine Änderung hinsichtlich der initialen Positionsinformation und initialen Orientierungsinformation am Startpunkt erfasst werden. Als Orientierung kann eine relative Orientierung bezogen auf den Startpunkt der Kalibrierfahrt und/oder eine absolute Orientierung insbesondere bezogen auf ein Koordinatensystem eines globalen Satellitensystems herangezogen werden, wobei entsprechende Umrechnungen vorgenommen werden können.

Somit kann, ausgehend von einer bekannten absoluten Orientierung in einem globalen Koordinatensystem an einem Startpunkt der Kalibrierfahrt, anhand der während der Kalibrierfahrt erfassten Orientierungsinformationen eine Ermittlung der Korrekturinformationen des Phasenzentrumsoffsets der Antenne erfolgen.

Vorzugsweise werden als initiale Positionsinformation und/oder initiale Orientierungsinformation am Startpunkt der Kalibrierfahrt in einem Datenspeicher insbesondere des Fahrzeugs abgespeicherte Werte und/oder Sensorinformationen herangezogen. Die in dem Datenspeicher abgespeicherten Werte können beispielsweise bei Abschluss einer vorherigen Fahrt gespeichert worden sein oder zum Beispiel im Verlauf oder Anschluss der Fertigung eines Fahrzeugs eingespeichert werden, wobei die Kalibrierfahrt vorzugsweise auf einer definierten Kalibrierstrecke erfolgt.

Weiterbildungsgemäß basiert die durch Sensorinformationen gewonnene initiale Positionsinformation und/oder initiale Orientierungsinformation am Startpunkt der Kalibrierfahrt auf mittels eines Zustandsschätzers, z.B. eine Variante eines Kalman-Filters, fusionierten Informationen von Sensorinformationen. Zweckmäßigerweise liegt die Unsicherheit einer Ausgabe des Zustandsschätzers am Startpunkt der Kalibrierfahrt bereits unter einem tolerierbaren Grenzwert. Was hierbei als tolerierbar angesehen wird, kann insbesondere anwendungsspezifisch entschieden werden. Der Zustandsschätzer ist vorzugsweise also bereits eingeschwungen. Damit kann eine verbesserte Datengenauigkeit erzielt werden bzw. eine gegenseitige Validierung der Informationsquellen erfolgen.

Die initiale Positionsinformation und die initiale Orientierungsinformation am Startpunkt der Kalibrierfahrt und/oder die Positionsinformation und die Orientierungsinformation während der Kalibrierfahrt werden bevorzugt mittels fahrzeugeigener Sensorik und/oder einer Referenzmesseinrichtung ermittelt. Mittels dieser Sensorik wird insbesondere die Änderung der Orientierung bezogen auf einen Startpunkt der Kalibrierfahrt erfasst. Die durch Sensorinformationen gewonnene Positionsinformation und/oder Orientierungsinformation während der Kalibrierfahrt basiert bevorzugt auf mittels eines Zustandsschätzers, z.B. eine Variante eines Kalman-Filters, fusionierten Informationen von Sensorinformationen insbesondere des Fahrzeugs. Die Referenzmesseinrichtung liefert zweckmäßigerweise genauere Informationen als mit der fahrzeugeigenen Sensorik realisierbar.

Fahrzeugeigene Sensorik ist insbesondere eine inertiale Messeinheit (IMU) und/oder Raddrehzahlsensoren und/oder Lenkwinkelsensorik und/oder einen Kompass. Ein beispielsgemäßes Verfahren welches zumindest eine Antenne als fahrzeugeigene Sensorik für den Zweck der Orientierungsbestimmung heranzieht, ist in dem zum maßgeblichen Datum der vorliegenden Anmeldung noch nicht veröffentlichten älteren Schutzrecht DE 10 2016 219 935.8 beschrieben.

Vorzugsweise ist die während der Kalibrierfahrt gefahrene Strecke im Wesentlichen kreisförmig bzw. ellipsenförmig. Alternativ oder in Ergänzung kann eine Kalibrierstrecke vorgesehen sein, welche eine Mehrzahl an Richtungswechseln umfasst, insbesondere eine Kalibrierstrecke vergleichbar einer Acht oder eines Unendlichzeichens. Durch die Wahl der gefahrenen Strecke während der Kalibrierfahrt sind die Empfangsrichtungen der Signale der Satelliten beinflussbar. Durch eine entsprechende Wahl des Streckenverlaufs ist somit eine Abdeckung von 360° Azimutwinkel der Signale jedes empfangenen Satelliten um eine Antenne erzielbar. Durch die verschiedenen Positionen der Satelliten können somit auch Kalibrierwerte für verschiedene Elevationswinkel bezüglich einer Antenne gewonnen werden.

Vorzugsweise erfolgt ein mehrfaches Durchfahren der Kalibrierstrecke während der Kalibrierfahrt. Dadurch ergibt sich eine größere Grundgesamtheit der Messwerte und damit statistische Sicherheit, wodurch wiederum die Genauigkeit des Ergebnisses der Optimierungsrechnung verbessert und die Qualität der Korrekturinformation erhöht werden kann.

Es kann entsprechend einer bevorzugten Weiterbildung vorgesehen sein eine Mehrzahl an Kalibrierfahrten vorzunehmen, wobei die Kalibrierfahrten zu unterschiedlichen Uhrzeiten bzw. Satellitenkonstellationen durchgeführt werden. Da die GNSS-Satelliten zu unterschiedlichen Uhrzeiten verschiedene Positionen über der Erdoberfläche einnehmen, kann somit eine Mehrzahl unterschiedlicher Einstrahlwinkel - Elevation und Azimut - für die Kalibrierung berücksichtigt werden. Alternativ oder in Ergänzung kann die Kalibrierstrecke eine Steilkurve (Kurve mit Neigung zur Seite des geringeren Radius) umfassen. Auch durch diese Vorgehensweise kann eine Mehrzahl unterschiedlicher Einstrahlwinkel eines möglichst großen Raumwinkels für die Kalibrierung berücksichtigt werden.

Weiterbildungsgemäß sind alternative oder in gemeinsamer Umsetzung sich ergänzende Vorgehensweisen zur Ermittlung der Korrekturinformationen vorgesehen:
Offline: Entsprechend einer Ausführungsform werden Messdaten, insbesondere Pseudostrecken und/oder Fahrdynamikdaten, während der Kalibrierfahrt zunächst lediglich aufgezeichnet und abgespeichert. Demnach erfolgt zumindest die Bestimmung einer Mehrzahl von Korrekturinformationen auf Basis der ermittelten Abweichungen und das Abspeichern der Korrekturinformationen in dem Datenspeicher bevorzugt nicht während der Kalibrierfahrt. Es kann auch vorgesehen sein, dass die Ermittlung der Abweichungen nicht während der Betriebsfahrt vorgenommen wird.

Bevorzugt wird auf Basis der solchermaßen erfassten Daten anschließend mittels Optimierungsrechnung ein entsprechender Korrekturparametersatz ermittelt, beispielsweise mittels Methode der kleinsten Quadrate.

Online: Die Bestimmung einer Mehrzahl von Korrekturinformationen auf Basis der ermittelten Abweichungen und das Abspeichern der Korrekturinformationen in dem Datenspeicher erfolgt vorzugsweise während der Kalibrierfahrt. Demnach wird einer weiteren Ausführungsform des erfindungsgemäßen Verfahrens zufolge die Berechnung der Korrekturinformationen auf Basis einer Optimierungsrechnung während der Kalibrierfahrt vorgenommen, insbesondere mit einer rekursiven Rechenvorschrift, beispielsweise mit einem RLS-Algorithmus (Recursive Least Squares Algorithmus).

Weiterhin kann vorgesehen sein Messsignale einer Referenzmesstechnik als Vergleichswerte im Sinne einer real tatsächlich vorliegenden Position bzw. Orientierung für das Optimierungsproblem der Berechnung der Korrekturinformationen heranzuziehen. Zu diesen Vergleichswerten ist zur Lösung der Optimierungsaufgabe entsprechend ein Minimum der Abweichung zu bestimmen. Auch diese Vorgehensweise kann bevorzugt Offline und/oder Online durchgeführt werden.

Vorzugsweise werden als Korrekturinformationen Korrekturwerte und/oder Berechnungsvorschriften, z.B. Polynominterpolation, erzeugt. Die Korrekturwerte können insbesondere in einer Tabelle, als Polynom oder in Form einer anderen Berechnungsgrundlage abgelegt werden.

Entsprechend einer Weiterbildung des Verfahrens erfolgt unter Heranziehung einer Mehrzahl der ermittelten Korrekturinformationen eine Bestimmung der Orientierung bezüglich eines globalen Koordinatensystems. Eine Bestimmung dieser Art wird dabei insbesondere im laufenden Betrieb des Fahrzeugs, also bei Gebrauch des Fahrzeugs, vorgenommen. Dementsprechend würde ein Verfahren zur Bestimmung der Orientierung eines Fahrzeugs bzw. der Antenne vorliegen.

Vorzugsweise wird durch Optimierungsberechnung bestimmt, bei welcher Orientierung sich für die Korrekturinformationen die kleinsten Residuen ergeben, wobei die solchermaßen bestimmte Orientierung als tatsächliche Orientierung angesehen wird und insbesondere durch wenigstens ein Fahrzeugsystem herangezogen wird. Ein diesbezügliches Fahrzeugsystem ist beispielsweise ein Navigationssystem des Fahrzeugs.

Zweckmäßigerweise werden die Position des Fahrzeugs bzw. die Distanz zu den Satelliten eines globalen Satellitennavigationssystems und/oder eine jeweils erwartete Empfangsstärke der Satellitensignale ermittelt.

Die Korrekturinformation(en) werden im Besonderen für die Korrektur winkelabhängiger Phasenzentrumsoffsets, insbesondere mit Bezug auf einen Antennenreferenzpunkt, der Antenne herangezogen. Die Korrekturinformation beschreibt demgemäß zweckmäßigerweise einen Absolutwert des Phasenzentrumsoffsets mit Bezug auf den Antennenreferenzpunkt.

Zur Korrektur des winkelabhängigen Phasenzentrumsoffsets wird weiterbildungsgemäß die mittels der Antenne erfasste erste Abstandsinformation der Antenne zu einem Satelliten des Satellitennavigationssystems unter Heranziehung der Korrekturinformationen und insbesondere unter Heranziehung der Orientierungsinformation korrigiert.

Entsprechend einer bevorzugten Ausführungsform des Verfahrens wird zur Korrektur des winkelabhängigen Phasenzentrumsoffsets ein Absolutwert der Korrekturinformation von einem Wert der mittels der Antenne erfassten Abstandsinformation der Antenne zu dem Satelliten abgezogen.

Somit wird eine genauere Positionierung erreicht. Die ermittelte Orientierung kann entweder in einem nachfolgenden Erfassungsschritt verwendet werden oder es erfolgt noch im selben Erfassungsschritt unter Heranziehung der Korrekturinformationen eine korrigierende Berechnung der Position. Bezüglich der erfassten Orientierung können die Korrekturinformationen damit unmittelbar zur Verbesserung der Genauigkeit der Positionsbestimmung durch Berücksichtigung der richtungsabhängigen Phasenzentrenoffsets herangezogen werden.

Das erfindungsgemäße Verfahren zur Ermittlung von Korrekturwerten kann vorzugsweise auch unter Laborbedingungen ausgeführt werden, insbesondere in der Weise, dass die Antenne aus unterschiedlichen Richtungen mit GNSS Signalen beaufschlagt wird.

Die Erfindung betrifft weiterhin eine Vorrichtung zur Ermittlung von Korrekturinformationen für eine Antenne, umfassend:
- eine elektronische Kontrolleinheit und
- eine Antenne zum Empfangen von Daten eines Satellitennavigationssystems, wobei
die elektronische Kontrolleinheit ausgestaltet ist:
- eine erste Abstandsinformation der Antenne zu einem Satelliten eines Satellitennavigationssystems zu bestimmen,
- Positionsinformationen und Orientierungsinformationen der Antenne auf Basis von Sensorinformationen zu erfassen,
- eine zweite Abstandsinformation der Antenne zu dem Satelliten auf Basis der mittels Sensorinformationen erfassten Positionsinformation zu erfassen,
- eine Abweichung der ersten Abstandsinformation zu der zweiten Abstandsinformation zu ermitteln,
- eine Korrekturinformation auf Basis der ermittelten Abweichungen zu bestimmen und
die Korrekturinformation mit Bezug auf die erfasste Orientierungsinformation in einem Datenspeicher abzuspeichern.

Die elektronische Kontrolleinheit ist dazu ausgestaltet, die Ermittlung von Korrekturinformationen mindestens für eine erste Frequenz und eine davon verschiedene zweite Frequenz durchzuführen.

Gemäß einer bevorzugten Ausführungsform ist die Vorrichtung zur Bestimmung einer geographischen Position des Fahrzeugs anhand von Signalen einer Mehrzahl von Satelliten ausgestaltet.

Die elektronische Kontrolleinheit umfasst vorzugsweise einen Prozessor, welcher ausgebildet ist, eine geographische Position des Fahrzeugs anhand von mittels der Antenne empfangenen Signalen einer Mehrzahl von Satelliten zu bestimmen. Der Prozessor kann alternativ oder in Ergänzung zur Bestimmung der Orientierung des Fahrzeugs unter Heranziehung von Sensorsignalen und/oder der Satellitensignale ausgestaltet sein.

Gemäß einer bevorzugten Ausführungsform ist die Vorrichtung zum Empfang und zur Verarbeitung von NAVSTAR GPS-, GLONASS-, GALILEO- und/oder BEIDOU-Satellitensignalen ausgestaltet.

Gemäß einer bevorzugten Ausführungsform umfasst die elektronische Kontrolleinheit ferner einen Speicher zum Speichern von Daten.

Die Vorrichtung ist ausgestaltet wenigstens eine Ausführungsform des erfindungsgemäßen Verfahrens auszuführen. Weitere Merkmale der Vorrichtung resultieren unmittelbar aus der Funktionalität und/oder den Merkmalen des Verfahrens, wobei die Vorrichtung zur Ausführung des Verfahrens geeignete funktionelle Baugruppen aufweist.

Gemäß einem dritten Aspekt wird die Aufgabe durch ein Computerprogramm mit einem Programmcode zum Ausführen wenigstens einer Ausführungsform des erfindungsgemäßen Verfahrens gelöst, wenn der Programmcode auf einem Computer ausgeführt wird.

Die Vorrichtung kann in Autos, in Flugzeugen oder in Schiffen angebracht werden.

### DETAILLIERTE BESCHREIBUNG

In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

Bei einem GNSS-System wird grundsätzlich die Satellitenposition mit den Ephemeriden übertragen. Aus diesen Werten kann unter Berücksichtigung des richtungsabhängigen Phasenzentrumsoffsets (PZO) die Position des Fahrzeugs und somit auch die Empfangsrichtung bestimmt werden. Nachfolgend ist eine sehr vereinfachte beispielsgemäße Berechnungsgrundlage einer Pseudostrecke PSRARP eines Satelliten zum Antennenreferenzpunkt dargestellt. $Azimut = 150 ° ;$ Elevation = 30° $Pseudostrecke \left(PSR\right) = 22123.456 , 400 m$ $Phasenzentrumsoffset \left(PZO\right) = 1 , 45 m$ $PSRARP = PSR - PZO = 22123.456 , 400 m - 1 , 45 m = 22123454 , 950 m$

Während der Fahrt des Autos ändert sich z.B. bei Kurvenfahrten die Orientierung der Antenne bezogen auf einen Satelliten und wird ein anderer Korrekturwert bspw. für den Azimut ausgewählt, sodass sich ein von obigem abweichendes Phasenzentrumsoffset (PZO) für den jeweiligen Satelliten ergibt. Beispielsweise dreht das Fahrzeug 10° nach links, wobei die Elevation gleich bleibt und das Azimut steigt: $Azimut = 160 ° ;$ Elevation = 30° $PSR = 22123.456 , 400 m$ $Phasenzentrumsoffset \left(PZO\right) = 1 , 7 m$ $PSRARP = PSR - PZO = 22123.456 , 400 m - 1 , 70 m = 22123454 , 700 m$

Liegt ein richtungsabhängiges Phasenzentrumsoffset vor, ergibt sich bei gegebener Ausrichtung der Antenne für jedes empfangene Satellitensignal ein unterschiedlicher Offsetwert, welcher bei Kenntnis des Phasenzentrumsoffsets entsprechend kompensiert werden kann. Diese Berechnung wird für jeden empfangenen Satelliten durchgeführt, so dass sich alle Pseudostrecken Messungen auf den gleichen Antennenreferenzpunkt (ARP) beziehen. Mit diesen korrigierten Daten kann anschließend eine präzisierte Bestimmung der Eigenposition erfolgen.

Voraussetzung für die obigen Berechnungen ist eine hinreichend genaue Kenntnis der Orientierung der Antenne bzw. des Fahrzeugs sowie das Vorliegen von richtungsabhängigen Korrekturinformationen für das Phasenzentrumsoffset. Aus den Informationen eines GNSS-Signals als solchem ist die Orientierung jedoch nicht unmittelbar abzuleiten und die Korrekturinformationen liegen insbesondere bei vergleichsweise preisgünstigen Antennen nicht vor.

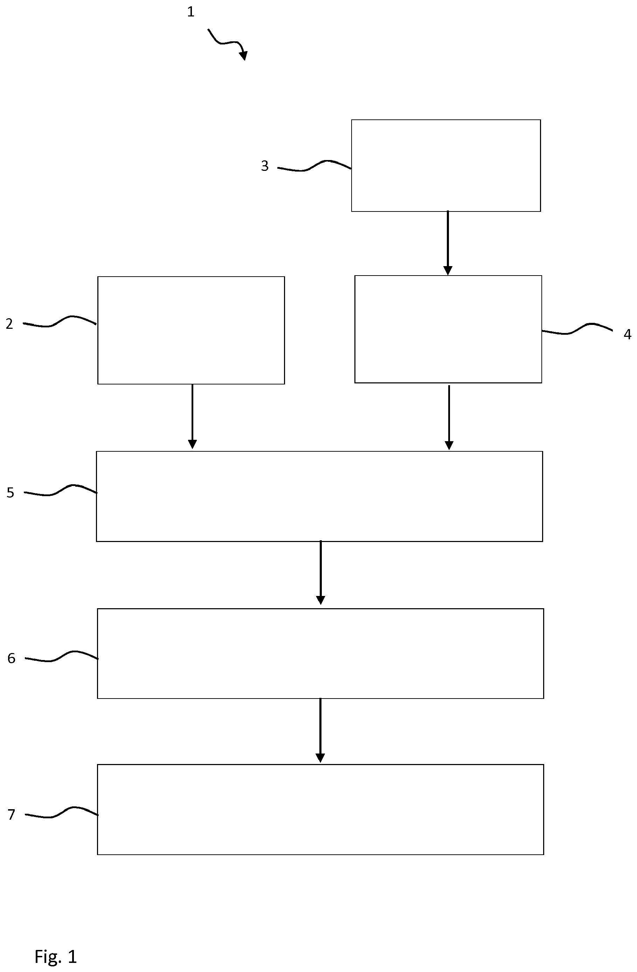

Die Figur 1 zeigt ein Ablaufdiagramm einer bevorzugten Ausführungsform des erfindungsgemäßen Verfahrens 1. Demnach erfolgt in einem Schritt 2 ein Bestimmen einer ersten Abstandsinformation der Antenne zu einem Satelliten eines Satellitennavigationssystems. In einem Schritt 3 wird eine Positionsinformation und eine Orientierungsinformation der Antenne auf Basis von Sensorinformationen erfasst, wobei auf dieser Basis in einem Schritt 4 eine zweite Abstandsinformation der Antenne zu dem Satelliten bestimmt wird. Anschließend erfolgt ein Ermitteln einer Abweichung der ersten Abstandsinformation zu der zweiten Abstandsinformation in einem Schritt 5. Auf Basis der ermittelten Abweichung wird in einem Schritt 6 eine Korrekturinformation bestimmt und die Korrekturinformation mit Bezug auf die mittels der Sensorinformationen erfasste Orientierungsinformation in einem Datenspeicher in einem Schritt 7 gespeichert. Im Sinne eines vertieften Verständnisses werden nachfolgend bevorzugte Ausführungen der Erfindung in detaillierterer Weise erläutert.

Auf Grundlage der mit den Ephemeriden übertragenen Satellitenposition besteht also bei erworbener Kenntnis der Orientierung und ermittelter richtungsabhängiger Korrekturparameter die Möglichkeit die Empfangsrichtung jedes Satelliten in Bezug auf die Richtungsabhängigkeit des Phasenzentrumsoffsets zu berücksichtigen. Entsprechend konstruierte hochwertige GNSS-Empfänger bzw. Antennen ggf. mit Korrekturinformationen sind jedoch sehr kostenintensiv. Bei möglichst kostengünstigen Empfangseinrichtungen, wie sie bevorzugt im Fahrzeug zum Einsatz kommen sollen, kann nicht vom Vorliegen entsprechender Korrekturwerte ausgegangen werden. Entsprechend eines Ausführungsbeispiels der Erfindung erfolgt die Ermittlung der Korrekturinformationen daher entsprechend nachfolgender Vorgehensweise.

Unter Bedingungen, welche einen ungehinderten Satellitenempfang ermöglichen, wird mit einem die GNSS-Empfangseinrichtung aufweisenden Fahrzeug eine Kalibrierfahrt durchgeführt. Dies erfolgt beispielsweise durch wenigstens einmaliges Fahren eines Kreises. Alternativ oder in Ergänzung zu einer kreisförmigen Kalibrierstrecke kann eine Kalibrierstrecke vorgesehen sein, welche eine Mehrzahl an Richtungswechseln umfasst, insbesondere eine Kalibrierstrecke vergleichbar einer Acht oder eines Unendlichzeichens. Die Ausrichtung der GNSS-Antenne bezogen auf das Fahrzeug ist bekannt, sodass auf die Orientierung des Fahrzeugs bei Bestimmung der Orientierung der GNSS-Antenne rückgeschlossen werden kann.

Vor dem Start der Kalibrierfahrt werden mittels dafür geeigneter fahrzeuginterner bzw. fahrzeugeigener Sensoren und/oder Positions- und/oder Orientierungsbestimmungseinrichtungen Initialzustandsinformationen ermittelt. Dies können mittels eines Zustandsschätzers, z.B. einem Kalman Filter, fusioniert werden. Am Startpunkt der Kalibrierfahrt ist der Zustandsschätzer daher vorzugsweise bereits eingeschwungen, weist also einen hinreichend konvergierten Zustand auf. Alternativ oder in Ergänzung können in einem Datenspeicher gespeicherte Werte herangezogen werden oder es wird eine hochgenaue Referenzmesseinrichtung für den Versuch verwendet, die entsprechende Daten für die Kalibrierung liefert. Die Referenzmesseinrichtung stellt insbesondere die für die Bestimmung der Orientierung und Position der Antenne notwendigen Daten zum Vergleich mit den mittels der Antenne erfassten Daten bereit. Auch kann vorgesehen sein, dass die Referenzmesseinrichtung die Satellitenpositionen und/oder die Empfangsintensität bereitstellt. Die Fahrzeugorientierung sowie die Position des Fahrzeugs in einem globalen Koordinatensystem am Startpunkt der Kalibrierfahrt sind somit bekannt.

Während der Kalibrierfahrt wird die Orientierung bzw. deren Änderung bezogen auf die Ausgangswerte vorzugsweise ebenfalls unter Verwendung fahrzeuginterner bzw. fahrzeugeigener Sensorik erfasst. Relative Änderungen in Bezug auf den Startpunkt können zum Beispiel mittels Kompass, einer inertialen Messeinrichtung, Raddrehzahlsensoren und/oder Lenkwinkel bestimmt werden. Ein weiteres beispielsgemäßes Verfahren zur Ermittlung der Ausrichtung ist zudem in dem zum maßgeblichen Datum der vorliegenden Anmeldung noch nicht veröffentlichten älteren Schutzrecht DE 10 2016 219 935.8 beschrieben, wobei die Orientierung aus den Satellitendaten ermittelt wird. Vorzugsweise wird eine Kombination bzw. Fusion von solchermaßen erhaltenen Sensordaten vorgenommen, um eine möglichst hohe Genauigkeit zu erzielen. Dies erfolgt vorzugsweise unter Verwendung eines Zustandsschätzers. Alternativ oder besonders bevorzugt in Ergänzung kann auch vorgesehen sein, eine auf insbesondere nicht korrigierten GNSS-Daten ermittelte Position oder einen Bewegungsverlauf der Kalibrierfahrt, welche mittels GNSS-Empfänger bestimmbar sind, heranzuziehen. Dadurch kann in vorteilhafter Weise eine Lokalisierung in einem globalen Koordinatensystem und, insbesondere in Fusion mit den mittels weiterer Sensorik bzw. Zustandsschätzer ermittelten Informationen, eine Ausrichtung bezogen auf das globale Koordinatensystem erzielt werden.

Wie erwähnt erfolgt die Fusion der Informationen insbesondere unter Verwendung eines Zustandsschätzers, z.B. eines Kalman Filters, welchem die Informationen der Sensorik zugeführt werden und der die Fahrzeugorientierung sowie Position und somit entsprechend die gefahrene Trajektorie während der Kalibrierfahrt ermittelt. Alternativ oder in Ergänzung kann während der Kalibrierfahrt eine hochgenaue Referenzmesseinrichtung verwendet werden, welche entsprechende Daten für die Kalibrierung liefert.

Auf Basis der mittels der Sensorik bzw. des Zustandsschätzers bestimmten Informationen werden während der Kalibrierfahrt die Eigenpositionen bzw. Trajektorie des Fahrzeugs erfasst. Außerdem werden anhand der mit den Ephemeriden übertragenen Satellitenpositionen die jeweiligen Richtungsvektoren von der Eigenposition zum jeweiligen Satelliten bestimmt.

Bevorzugt wird jeweils die Abweichung der Pseudostrecke, welche auf Grundlage der mittels der Sensorik bzw. des Zustandsschätzers bestimmten Eigenposition zum jeweiligen Satelliten, zur Pseudostrecke, die lediglich anhand eines GNSS-Signals berechnet wird, berechnet. Die solchermaßen bestimmte Abweichung wird als vom jeweiligen Richtungsvektor abhängiges Phasenzentrumsoffset angesehen. Für die betreffende Richtung des Richtungsvektors liegt somit eine quantitative Kenntnis über das Phasenzentrumsoffset vor. Dieser Wert bildet entsprechend vorzugsweise die Korrekturinformation zur Korrektur des Phasenzentrumsoffsets.

Grundlage für die Bestimmung der Korrekturinformationen bildet bevorzugt somit die Kenntnis über die Position und Orientierung des Fahrzeugs in einem globalen Koordinatensystem, welche mittels Sensorinformationen bzw. Referenzmesstechnik ermittelt werden. Ergibt sich beispielsweise bei einem relativen Gierwinkel (Orientierung) bezogen auf die Ausgangsausrichtung von 10°, dass die Entfernung zum Satelliten im Verglich mit der angenommenen tatsächlichen Position 10 cm zu kurz und im Vergleich zu einer an dieser tatsächlichen Position zu erwartenden Signalstärke 5 dB zu schwach ist, können diese Differenzwerte als Kalibrierinformationen abgespeichert werden. Mit sich ändernder Orientierung ändert sich auch der Phasenzentrumsoffset in Bezug auf die Empfangsrichtung bzw. Richtungsvektor zum Satelliten. Auf diese Art und Weise erfolgt in vorteilhafter Weise für eine Vielzahl an Orientierungen die Ermittlung der Kalibrierinformationen.

Vorzugsweise werden als Korrekturinformationen Korrekturwerte und/oder Berechnungsvorschriften, z.B. Polynominterpolation mit den Korrekturwerten als Stützstellen, erzeugt. Die Korrekturwerte können insbesondere in einer Tabelle, als Polynom oder in Form einer anderen Berechnungsgrundlage abgelegt werden.

Weiterhin wird die Kalibrierstrecke bevorzug mehrfach durchfahren. Aufgrund der somit vorliegenden höheren Zahl an Messwerten und Kalibrierinformationen zu jeder Ausrichtung kann eine Verbesserung der Genauigkeit der Korrekturinformationen erreicht werden.

Die Ermittlung der Korrekturinformationen kann erfindungsgemäß Offline und/oder Online vorgenommen werden:
**Offline:** Entsprechend einer Ausführungsform werden Messdaten, insbesondere Pseudostrecken und Fahrdynamikdaten, während der Kalibrierfahrt zunächst lediglich aufgezeichnet und abgespeichert. Der Kalibrierfahrt nachfolgend wird eine Bestimmung der Korrekturinformationen mittels Optimierungsrechnung vorgenommen.
**Online:** Entsprechend einer weiteren Ausführungsform werden die Messdaten, insbesondere Pseudostrecken und Fahrdynamikdaten, während der Kalibrierfahrt aufgezeichnet und die Berechnung der Korrekturinformationen erfolgt mittels Optimierungsrechnung während der Kalibrierfahrt.

Durch die beschriebene Vorgehensweise können die Korrekturinformationen zur Kompensation eines Phasenzentrumsoffsets einer Antenne bestimmt werden.

Ausgehend von den ermittelten Korrekturinformationen kann im üblichen Betrieb des Fahrzeugs die Orientierung des Fahrzeugs bevorzugt mittels Optimierungsrechnung bestimmt werden, wobei für eine erfasste Position eine Orientierung ermittelt wird, bei welcher die richtungsabhängigen anzuwendenden Korrekturen mittels der Korrekturinformationen die kleinsten Residuen aufweisen. Mit anderen Worten wird als Ausrichtung die Orientierung ansehen, bei welcher die geringste Abweichung zu den vorhandenen Korrekturinformationen bzw. Messwerten vorliegt.

Erwähnte Schritte des erfindungsgemäßen Verfahrens können in der angegebenen Reihenfolge ausgeführt werden. Sie können jedoch auch in einer anderen Reihenfolge ausgeführt werden. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

## Patentansprüche

1. Verfahren zur Ermittlung von Korrekturinformationen (1) für eine Antenne zum Empfangen von Daten eines Satelliten eines Satellitennavigationssystems, aufweisend die Schritte:
- (2) Bestimmen einer ersten Abstandsinformation der Antenne zu einem Satelliten eines Satellitennavigationssystems,
- (3) Erfassen einer Positionsinformation und einer Orientierungsinformation der Antenne auf Basis von Sensorinformationen,
- (4) Bestimmen einer zweiten Abstandsinformation der Antenne zu dem Satelliten auf Basis der mittels Sensorinformationen erfassten Positionsinformation,
- (5) Ermitteln einer Abweichung der ersten Abstandsinformation zu der zweiten Abstandsinformation,
- (6) Bestimmen einer Korrekturinformation auf Basis der ermittelten Abweichung und
- (7) Abspeichern der Korrekturinformation mit Bezug auf die mittels der Sensorinformationen erfasste Orientierungsinformation in einem Datenspeicher,
**dadurch gekennzeichnet, dass**
- die Ermittlung von Korrekturinformationen mindestens für eine erste Frequenz und eine davon verschiedene zweite Frequenz durchgeführt wird.

2. Verfahren nach Anspruch 1, **dadurch gekennzeichnet, dass** das Verfahren zumindest teilweise während einer Kalibrierfahrt mit einem die Antenne aufweisenden Fahrzeug ausgeführt wird.

3. Verfahren nach Anspruch 2, **dadurch gekennzeichnet, dass** an einem Startpunkt der Kalibrierfahrt ein Erfassen einer initialen Positionsinformation in einem globalen Koordinatensystem und einer initialen Orientierungsinformation vorgenommen wird, wobei während der Kalibrierfahrt die Positionsinformation und die Orientierungsinformation auf Basis von Sensorinformationen mit Bezug auf eine Änderung hinsichtlich der initialen Positionsinformation und initialen Orientierungsinformation am Startpunkt erfasst werden.

4. Verfahren nach Anspruch 3, **dadurch gekennzeichnet, dass** als initiale Positionsinformation und/oder initiale Orientierungsinformation am Startpunkt der Kalibrierfahrt Sensorinformationen und/oder in einem Datenspeicher abgespeicherte Werte herangezogen werden.

5. Verfahren nach Anspruch 4, **dadurch gekennzeichnet, dass** die durch Sensorinformationen gewonnene initiale Positionsinformation und/oder initiale Orientierungsinformation am Startpunkt der Kalibrierfahrt auf mittels eines Zustandsschätzers fusionierten Informationen von Sensorinformationen basiert.

6. Verfahren nach zumindest einem der Ansprüche 3 bis 5, **dadurch gekennzeichnet, dass** die initiale Positionsinformation und die initiale Orientierungsinformation am Startpunkt der Kalibrierfahrt und/oder die Positionsinformation und die Orientierungsinformation während der Kalibrierfahrt mittels fahrzeugeigener Sensorik und/oder einer Referenzmesseinrichtung ermittelt werden.

7. Verfahren nach zumindest einem der Ansprüche 2 bis 6, **dadurch gekennzeichnet, dass** eine während der Kalibrierfahrt zumindest einmal gefahrene Strecke im Wesentlichen kreisförmig oder ellipsenförmig ist oder eine Mehrzahl an Richtungswechseln aufweist.

8. Verfahren nach zumindest einem der Ansprüche 2 bis 7, **dadurch gekennzeichnet, dass** vorgesehen ist eine Mehrzahl an Kalibrierfahrten vorzunehmen, wobei diese zu unterschiedlichen Uhrzeiten erfolgen.

9. Verfahren nach zumindest einem der Ansprüche 2 bis 8, **dadurch gekennzeichnet, dass** zumindest die Bestimmung einer Mehrzahl von Korrekturinformationen der Antenne auf Basis der ermittelten Abweichungen und das Abspeichern der Korrekturinformationen in dem Datenspeicher nicht während der Kalibrierfahrt erfolgt.

10. Verfahren nach zumindest einem der Ansprüche 2 bis 8, **dadurch gekennzeichnet, dass** die Bestimmung einer Mehrzahl von Korrekturinformationen auf Basis der ermittelten Abweichungen und das Abspeichern der Korrekturinformationen in dem Datenspeicher während der Kalibrierfahrt erfolgt.

11. Verfahren nach zumindest einem der vorgenannten Ansprüche, **dadurch gekennzeichnet, dass** die Bestimmung der Korrekturinformationen auf Basis der ermittelten Abweichungen mittels Optimierungsrechnung vorgenommen wird.

12. Verfahren nach dem vorgenannten Anspruch, **dadurch gekennzeichnet, dass** Messsignale einer Referenzmesstechnik als Vergleichswerte für die Optimierungsrechnung zur Bestimmung der Korrekturinformationen heranzuziehen.

13. Verfahren nach wenigstens einem der vorgenannten Ansprüche, **dadurch gekennzeichnet, dass** unter Heranziehung einer Mehrzahl der ermittelten Korrekturinformationen eine Bestimmung der Orientierung bezüglich eines globalen Koordinatensystems erfolgt.

14. Verfahren nach wenigstens einem der vorgenannten Ansprüche, **dadurch gekennzeichnet, dass** durch Optimierungsberechnung bestimmt wird, bei welcher Orientierung sich für eine Mehrzahl ermittelter Korrekturinformationen die kleinsten Residuen ergeben, wobei die solchermaßen bestimmte Orientierung als tatsächliche Orientierung angesehen wird.

15. Verfahren nach wenigstens einem der vorgenannten Ansprüche, **dadurch gekennzeichnet, dass** die Korrekturinformation für die Korrektur eines winkelabhängigen Phasenzentrumsoffsets der Antenne herangezogen wird.

16. Verfahren nach zumindest einem der vorhergehenden Ansprüche, **dadurch gekennzeichnet, dass** die Korrekturinformation für die Korrektur eines winkelabhängigen Phasenzentrumsoffsets mit Bezug auf einen Antennenreferenzpunkt der Antenne herangezogen wird.

17. Verfahren nach zumindest einem der Ansprüche 15 oder 16, **dadurch gekennzeichnet, dass** zur Korrektur des winkelabhängigen Phasenzentrumsoffsets die mittels der Antenne erfasste Abstandsinformation der Antenne zu einem Satelliten des Satellitennavigationssystems unter Heranziehung der Korrekturinformationen korrigiert wird.

18. Verfahren nach zumindest einem der Ansprüche 15 bis 17, **dadurch gekennzeichnet, dass** zur Korrektur des winkelabhängigen Phasenzentrumsoffsets ein Absolutwert der Korrekturinformation von einem Wert der mittels der Antenne erfassten Abstandsinformation der Antenne zu dem Satelliten abgezogen wird.

19. Vorrichtung zur Ermittlung von Korrekturinformationen für eine Antenne, umfassend:
- eine elektronische Kontrolleinheit und
- eine Antenne zum Empfangen von Daten eines Satellitennavigationssystems, wobei
die elektronische Kontrolleinheit ausgestaltet ist:
- eine erste Abstandsinformation der Antenne zu einem Satelliten eines Satellitennavigationssystems zu bestimmen,
- Positionsinformationen und Orientierungsinformationen der Antenne auf Basis von Sensorinformationen zu erfassen,
- eine zweite Abstandsinformation der Antenne zu dem Satelliten auf Basis der mittels Sensorinformationen erfassten Positionsinformation zu erfassen,
- eine Abweichung der ersten Abstandsinformation zu der zweiten Abstandsinformation zu ermitteln,
- eine Korrekturinformation auf Basis der ermittelten Abweichungen zu bestimmen und
- die Korrekturinformation mit Bezug auf die erfasste Orientierungsinformation in einem Datenspeicher abzuspeichern,
**dadurch gekennzeichnet, dass**
- die elektronische Kontrolleinheit dazu ausgestaltet ist, die Ermittlung von Korrekturinformationen mindestens für eine erste Frequenz und eine davon verschiedene zweite Frequenz durchzuführen.

## Claims

1. A method for determining correction information (1) for an antenna for receiving data from a satellite of a satellite navigation system, comprising the following steps:
- (2) determining first distance information of the antenna with respect to a satellite of a satellite navigation system,
- (3) acquiring position information and orientation information of the antenna on the basis of sensor information,
- (4) determining second distance information of the antenna with respect to the satellite on the basis of the position information acquired by means of sensor information,
- (5) determining a deviation of the first distance information from the second distance information,
- (6) determining correction information on the basis of the determined deviation, and
- (7) storing the correction information with respect to the orientation information acquired by means of the sensor information in a data memory,
**characterised in that**
- the determination of correction information is carried out at least for a first frequency and a second frequency different therefrom.

2. The method as claimed in claim 1, **characterised in that** the method is carried out at least partially during a calibration journey using a vehicle having the antenna.

3. The method as claimed in claim 2**, characterised in that,** at a starting point of the calibration journey, initial position information in a global coordinate system and initial orientation information are acquired, wherein, during the calibration journey, the position information and the orientation information are stored on the basis of sensor information with respect to a change with regard to the initial position information and initial orientation information at the starting point.

4. The method as claimed in claim 3, **characterised in that** sensor information and/or values stored in a data memory are used as initial position information and/or initial orientation information at the starting point of the calibration journey.

5. The method as claimed in claim 4, **characterised in that** the initial position information and/or initial orientation information obtained by way of sensor information at the starting point of the calibration journey is based on information of sensor information fused by means of a state estimator.

6. The method as claimed in at least one of claims 3 to 5, **characterised in that** the initial position information and the initial orientation information at the starting point of the calibration journey and/or the position information and the orientation information during the calibration journey are determined by means of the sensor system of the vehicle and/or a reference measuring device.

7. The method as claimed in at least one of claims 2 to 6, **characterised in that** a route travelled at least once during the calibration journey is substantially circular or elliptical or has a plurality of direction changes.

8. The method as claimed in at least one of claims 2 to 7, **characterised in that** it is provided that a plurality of calibration operations is carried out, wherein they are carried out at different times of day.

9. The method as claimed in at least one of claims 2 to 8, **characterised in that** at least the determination of a plurality of items of correction information of the antenna on the basis of the determined deviations and the storage of the correction information in the data memory does not take place during the calibration journey.

10. The method as claimed in at least one of claims 2 to 8 **, characterised in that** the determination of a plurality of items of correction information on the basis of the determined deviations and the storage of the correction information in the data memory takes place during the calibration journey.

11. The method as claimed in at least one of the preceding claims, **characterised in that** the correction information is determined on the basis of the determined deviations by means of optimization calculation.

12. The method as claimed in the preceding claim, **characterised in that** measurement signals from a reference measurement technique are used as comparative values for the optimization calculation for determining the correction information.

13. The method as claimed in at least one of the preceding claims, **characterised in that** the orientation with respect to a global coordinate system is determined using a plurality of the determined items of correction information.

14. The method as claimed in at least one of the preceding claims, **characterised in that** it is determined, by means of optimization calculation, at which orientation the smallest remainders result for a plurality of determined items of correction information, wherein the orientation determined in this way is regarded as the actual orientation.

15. The method as claimed in at least one of the preceding claims, **characterised in that** the correction information is used for the correction of an angle-dependent phase centre offset of the antenna.

16. The method as claimed in at least one of the preceding claims, **characterised in that** the correction information is used for the correction of an angle-dependent phase centre offset with respect to an antenna reference point of the antenna.

17. The method as claimed in at least one of claims 15 and 16, **characterised in that,** for the correction of the angle-dependent phase centre offset, the distance information, acquired by means of the antenna, of the antenna with respect to a satellite of the satellite navigation system is corrected using the correction information.

18. The method as claimed in at least one of claims 15 to 17, **characterised in that,** to correct the angle-dependent phase centre offset, an absolute value of the correction information is subtracted from a value of the distance information, acquired by means of the antenna, of the antenna with respect to the satellite.

19. A device for determining correction information for an antenna, comprising:
- an electronic control unit and
- an antenna for receiving data from a satellite navigation system, wherein
the electronic control unit is designed:
- to determine first distance information of the antenna with respect to a satellite of a satellite navigation system,
- to acquire position information and orientation information of the antenna on the basis of sensor information,
- to acquire second distance information of the antenna with respect to the satellite on the basis of the position information acquired by means of sensor information,
- to determine a deviation of the first distance information from the second distance information,
- to determine correction information on the basis of the determined deviations, and
- to store the correction information with respect to the acquired orientation information in a data memory,
**characterised in that**
- the electronic control unit is designed to carry out the determination of correction information at least for a first frequency and a second frequency different therefrom.

## Revendications

1. Procédé de détermination d'informations de correction (1) pour une antenne destinée à recevoir des données d'un satellite d'un système de navigation par satellite, comprenant les étapes :
- (2) de détermination d'une première information de distance entre l'antenne et un satellite d'un système de navigation par satellite,
- (3) d'acquisition d'une information de position et d'une information d'orientation de l'antenne sur la base d'informations de capteurs,
- (4) de détermination d'une seconde information de distance entre l'antenne et le satellite sur la base de l'information de position acquise au moyen d'informations de capteurs,
- (5) de détermination d'un écart entre la première information de distance et la seconde information de distance,
- (6) de détermination d'une information de correction sur la base de l'écart déterminé et
- (7) d'enregistrement de l'information de correction dans une mémoire de données en association avec l'information d'orientation acquise au moyen des informations de capteurs,
**caractérisé en ce que**
- la détermination d'informations de correction est effectuée au moins pour une première fréquence et une seconde fréquence différente de la première.

2. Procédé selon la revendication 1, **caractérisé en ce que** le procédé est exécuté au moins partiellement pendant un trajet de calibrage avec un véhicule présentant l'antenne.

3. Procédé selon la revendication 2, **caractérisé en ce que**, au niveau d'un point de départ du trajet de calibrage sont effectuées une acquisition d'une information de position initiale dans un système de coordonnées global et d'une information d'orientation initiale, dans lequel l'information de position et l'information d'orientation sont acquises pendant le trajet de calibrage sur la base d'informations de capteurs par rapport à une modification de l'information de position initiale et de l'information d'orientation initiale au point de départ.

4. Procédé selon la revendication 3, **caractérisé en ce que**, comme information de position initiale et/ou information d'orientation initiale au point de départ du trajet de calibrage, sont utilisées des informations de capteurs et/ou des valeurs stockées dans une mémoire de données.

5. Procédé selon la revendication 4, **caractérisé en ce que** l'information de position initiale et/ou l'information d'orientation initiale au point de départ du trajet de calibrage, obtenue par des informations de capteurs, est basée sur des informations de capteurs fusionnées au moyen d'un estimateur d'état.

6. Procédé selon l'une quelconque des revendications 3 à 5, **caractérisé en ce que** l'information de position initiale et l'information d'orientation initiale au point de départ du trajet de calibrage et/ou l'information de position et l'information d'orientation pendant le trajet de calibrage sont déterminées au moyen de capteurs embarqués de véhicule et/ou d'un dispositif de mesure de référence.

7. Procédé selon l'une quelconque des revendications 2 à 6, **caractérisé en ce qu'**un trajet parcouru au moins une fois pendant le trajet de calibrage est essentiellement circulaire ou elliptique, ou présente une pluralité de changements de direction.

8. Procédé selon l'une quelconque des revendications 2 à 7, **caractérisé en ce qu'**il est prévu d'effectuer une pluralité de trajets de calibrage, dans lequel ceux-ci sont réalisés à des heures différentes.

9. Procédé selon l'une quelconque des revendications 2 à 8, **caractérisé en ce qu'**au moins la détermination d'une pluralité d'informations de correction de l'antenne sur la base des écarts déterminés et le stockage des informations de correction dans la mémoire de données ne sont pas effectués pendant le trajet de calibrage.

10. Procédé selon l'une quelconque des revendications 2 à 8, **caractérisé en ce que** la détermination d'une pluralité d'informations de correction sur la base des écarts déterminés et le stockage des informations de correction dans la mémoire de données sont effectués pendant le trajet de calibrage.

11. Procédé selon l'une quelconque des revendications précédentes, **caractérisé en ce que** la détermination des informations de correction sur la base des écarts déterminés est effectuée au moyen d'un calcul d'optimisation.

12. Procédé selon la revendication précédente, **caractérisé en ce que** des signaux de mesure d'une technique de mesure de référence sont utilisés comme valeurs de comparaison pour le calcul d'optimisation servant à la détermination des informations de correction.

13. Procédé selon l'une quelconque des revendications précédentes, **caractérisé en ce que**, sur la base d'une pluralité des informations de correction déterminées, une détermination de l'orientation par rapport à un système de coordonnées global est effectuée.

14. Procédé selon l'une quelconque des revendications précédentes, **caractérisé en ce que**, par calcul d'optimisation, il est déterminé pour quelle orientation, pour une pluralité d'informations de correction déterminées, les résidus sont minimaux, dans lequel l'orientation ainsi déterminée est considérée comme l'orientation réelle.

15. Procédé selon l'une quelconque des revendications précédentes, **caractérisé en ce que** l'information de correction est utilisée pour la correction d'un décalage de centre de phase dépendant de l'angle de l'antenne.

16. Procédé selon l'une quelconque des revendications précédentes, **caractérisé en ce que** l'information de correction est utilisée pour la correction d'un décalage de centre de phase dépendant de l'angle par rapport à un point de référence d'antenne de l'antenne.

17. Procédé selon l'une quelconque des revendications 15 ou 16, **caractérisé en ce que**, pour la correction du décalage de centre de phase dépendant de l'angle, l'information de distance entre l'antenne et un satellite du système de navigation par satellite, acquise au moyen de l'antenne, est corrigée sur la base des informations de correction.

18. Procédé selon au moins l'une des revendications 15 à 17, **caractérisé en ce que**, pour corriger le décalage de centre de phase dépendant de l'angle, une valeur absolue de l'information de correction est soustraite d'une valeur de l'information de distance de l'antenne au satellite acquise au moyen de l'antenne.

19. Dispositif de détermination d'informations de correction pour une antenne, comprenant :
- une unité de contrôle électronique et
- une antenne destinée à recevoir des données d'un système de navigation par satellite, dans lequel
l'unité de contrôle électronique est configurée pour :
- déterminer une première information de distance entre l'antenne et un satellite d'un système de navigation par satellite,
- acquérir des informations de position et des informations d'orientation de l'antenne sur la base d'informations de capteurs,
- déterminer une seconde information de distance entre l'antenne et le satellite sur la base de l'information de position acquise au moyen d'informations de capteurs,
- déterminer un écart entre la première information de distance et la seconde information de distance,
- déterminer une information de correction sur la base des écarts déterminés et
- stocker l'information de correction en association avec l'information d'orientation acquise dans une mémoire de données,
**caractérisé en ce que**
- l'unité de contrôle électronique est configurée pour effectuer la détermination d'informations de correction au moins pour une première fréquence et une seconde fréquence différente de la première.
